# EUROPÄISCHE PATENTANMELDUNG

(11) **EP 1 083 617 A2**
(43) Veröffentlichungstag der Anmeldung: **14.03.2001**
(21) Anmeldenummer: 00115984.7
(22) Anmeldetag: 26.07.2000
(51) Int. Cl.: H01M 8/06

(54) **Verfahren zum Betreiben eines Brennstoffzellensystems und Anordnung zur Durchführung des Verfahrens**

(30) Priorität: 10.09.1999 DE 19943248
(71) Anmelder: XCELLSIS GmbH, 73230 Kirchheim / Teck-Nabern (DE)
(72) Erfinder: Schüssler, Martin, Dr., 89073 Ulm (DE)
(74) Vertreter: Kocher, Klaus-Peter Dipl.-Phys

(57) **Zusammenfassung**

Die Erfindung betrifft ein Verfahren zum Betreiben eines Brennstoffzellensystems mit einem Wasserhaushalt, bei dem ein wasserstoffhaltiges Medium oder Mediengemisch in einem Reformierungsreaktor mit einem Wasserbedarf unter Wasserzugabe zu einem wasserstoffreichen Reformat reformiert wird, das Reformat einem Anodenraum einer Brennstoffzelle über eine Anodenzuführung zugeführt und in der Brennstoffzelle mit Sauerstoff aus einem Kathodenraum der Brennstoffzelle zu Wasser umgesetzt wird, wobei der Wasserbedarf der Reformierungsreaktion und/oder der Wasserhaushalt des Brennstoffzellensystems direkt an eine Oxidationsrate einer teilweisen Verbrennung des wasserstoffhaltigen Mediums oder Mediengemischs in einer Oxidationseinheit stromauf des Reformierungsreaktors gekoppelt wird.

## Beschreibung

Die Erfindung betrifft ein Verfahren zum Betreiben eines Brennstoffzellensystems nach dem Oberbegriff des Anspruchs 1 sowie eine Anordnung zur Durchführung des Verfahrens nach dem Oberbegriff des Anspruchs 15.

Derartige Brennstoffzellensysteme sind beispielsweise in brennstoffzellenbetriebenen Kraftfahrzeugen einsetzbar. Über die Anodenzuführung wird ein geeignetes flüssiges oder gasförmiges Brennstoffgemisch, z.B. ein wasserstoffreiches Gasgemisch oder ein flüssiges Wasser/Methanolgemisch, in den Anodenraum der Brennstoffzelle eingespeist, wo das reagierte Gemisch über die Anodenabführung aus dem Anodenraum abgeführt wird.

Über die Kathodenzuführung wird ein sauerstoffhaltiges Gas, wie Luft, in den Kathodenraum eingespeist, wo der Sauerstoff an der Kathode unter Wasserbildung reduziert wird, wonach das wasserhaltige Kathodenabgas über die Kathodenabführung aus dem Kathodenraum abgeführt wird.

In vielen Anwendungsfällen ist es erwünscht, das im Kathodenabgas enthaltene Wasser vor den übrigen Bestandteilen abtrennen zu können, z.B. um das Wasser und/oder das vom enthaltenen Wasser Gereinigte Kathodenabgas wieder im System zu nutzen. Zu diesem Zweck dienen die in der Kathodenabführung angeordneten Wasserabtrennmittel. Üblicherweise bestehen diese aus einem Kondensator, in welchem das Wasser bei geeignet niedriger Temperatur auskondensiert wird, was einen entsprechend voluminösen Wärmeübertrageraufbau für den Kondensator erfordert, um das Kathodenabgas ausreichend herunterzukühlen.

Häufig ist in der Kathodenabführung auch ein Expander in Form einer mit einem kathodenzufuhrseitigen Kompressor gekoppelten Turbine vorgesehen, wobei stromaufwärts und/oder stromabwärts des Expanders ein jeweiliger Kondensator angeordnet sein kann. Ein solches Brennstoffzellensystem ist z.B. in der Offenlegungsschrift DE 197 01 560 A1 beschrieben.

In der älteren Schrift DE 199 11 016 ist beschrieben, das Wasser aus dem Kathodenabgas durch ein Verfahren zurückzugewinnen, bei dem das Wasserabtrennmittel eine Membran ist. Dort muß die Temperatur zur Wasserabscheidung nicht so stark abgesenkt werden, jedoch wird ein ausreichend hohes Druckgefälle vom auf der einen Membranseite angrenzenden Gemischraum zum auf der anderen Membranseite angrenzenden Wassersammelraum benötigt, um eine zufriedenstellend selektive Wasserabscheidung vom restlichen Kathodenabgas zu leisten.

Bei einem Brennstoffzellensystem mit einem niedrigen Systemdruck verschärft sich das Problem der Wasserabscheidung, da bei geringerem Systemdruck einerseits keine ausreichend hohe Druckdifferenz für Membranverfahren, andererseits die Anforderungen an die Temperaturabsenkung bei der Wasserabscheidung mittels Kondensator im Vergleich zu einem Hochdrucksystem steigen und ein entsprechender Wärmeübertrageraufbau noch voluminöser geraten muß.

Der Erfindung liegt die Aufgabe zugrunde, eine Vorrichtung und ein Verfahren anzugeben, bei dem eine Wasserrückgewinnung in einem Brennstoffzellensystem mit niedrigem Druck gegenüber dem Stand der Technik verbessert ist.

Die Aufgabe wird durch ein Verfahren zum Betreiben eines Brennstoffzellensystems gemäß dem Oberbegriff des Anspruchs 1 mit den Merkmalen im Kennzeichen des Anspruchs 1 und bei einer Anordnung zur Durchführung des Verfahrens gemäß dem Oberbegriff des Anspruchs 14 mit den Merkmalen im Kennzeichen des Anspruchs 14 gelöst.

Im erfindungsgemäßen Verfahren zum Betreiben eines Brennstoffzellensystems mit einem Wasserhaushalt, bei dem ein wasserstoffhaltiges Medium oder Mediengemisch als Betriebsmittel verwendet wird, ist der Wasserbedarf einer Reformierungsreaktion und/oder der Wasserhaushalt des Brennstoffzellensystems direkt an eine Oxidationsrate einer teilweisen Verbrennung des wasserstoffhaltigen Mediums oder Mediengemischs in einer Oxidationseinheit stromauf des Reformierungsreaktors gekoppelt.

Zweckmäßigerweise wird dabei bei erhöhtem Wasserbedarf der Reformierungsreaktion die Oxidationsrate erhöht und bei verringertem Wasserbedarf die Oxidationsrate gesenkt.

Vorzugsweise wird die Reformierungsreaktion direkt mit bei der Verbrennung entstehender thermischer Energie unterstützt. Besonders bevorzugt wird dabei die Reformierungsreaktion thermisch nur durch bei der Verbrennung entstehende thermische Energie unterstützt.

In einer bevorzugten Weiterbildung wird eine Verdampfungsreaktion in einem ersten Verdampfer mit bei der Verbrennung entstehender thermischer Energie unterstützt.

In einer weiteren bevorzugten Weiterbildung wird thermische Energie aus Abgasen der Brennstoffzelle zur Verdampfung des wasserstoffhaltigen Mediums oder Mediengemisch in einem zweiten Verdampfer bereitgestellt, so daß das wasserstoffhaltige Medium oder Mediengemisch dem ersten Verdampfer zumindest teilweise gasförmig zugeführt wird. Günstigerweise wird bei erhöhtem Wasserbedarf der Reformierungsreaktion der zweite Verdampfer überbrückt.

In einer weiteren bevorzugten Weiterbildung der Erfindung wird aus dem Reformat Kohlenmonoxid durch eine exotherme Reaktion entfernt, wobei die Kühlung der exothermen Reaktion unabhängig vom thermischen Bedarf der Reformierungsreaktion erfolgt.

In einer weiteren bevorzugten Weiterbildung wird thermische Energie aus einem thermischen System bestehend aus erstem Verdampfer, Oxidationsseinheit und Reformierungseinheit oder bestehend aus Oxidationsseinheit und Reformierungseinheit zusätzlich abgeführt, um die Oxidationsrate zu erhöhen.

Es ist günstig, eine Zufuhr von Sauerstoff in die Oxidationseinheit in Abhängigkeit einer Temperatur in einem Bereich der Verbrennung und/oder einem Bereich der Reformierungsreaktion vorzunehmen.

Eine weitere günstige Maßnahme ist, eine Zufuhr von Sauerstoff in die Oxidationseinheit in Abhängigkeit einer Austrittstemperatur eines Mediums aus der Oxidationseinheit und/oder einer Austrittstemperatur des Reformats aus der Reformierungsreaktion vorzunehmen.

Die Anordnung zur Durchführung des erfindungsgemäßen Verfahrens besteht aus einem Brennstoffzellensystem, bei dem in einer Anodenzuführung ein Bauteil vorgesehen ist, welches eine Oxidationseinheit zur Oxidation eines wasserstoffhaltigen Mediums oder Mediengemischs und eine Reformierungseinheit zur Erzeugung eines wasserstoffreichen Reformats aus dem wasserstoffhaltigen Medium oder Mediengemisch aufweist, wobei die Oxidationseinheit thermisch direkt mit der Reformierungseinheit gekoppelt ist.

Eine vorteilhafte Weiterbildung ist, im Bauteil zusätzlich einen ersten Verdampfer zum Verdampfen des wasserstoffhaltigen Mediums oder Mediengemischs vorzusehen, der thermisch direkt mit der Oxidationseinheit gekoppelt ist.

In einer bevorzugten Anordnung ist bezogen auf das wasserstoffhaltige Medium oder Mediengemisch zustromseits vor dem Bauteil zusätzlich ein zweiter Verdampfer angeordnet, der mit Abgasen der Brennstoffzelle beheizbar ist.

Vorteilhaft ist, zwischen dem Bauteil und Anodenraum eine Kohlenmonoxid-Entfernungseinheit zum Entfernen von Kohlenmonoxid aus dem Reformat angeordnet ist, wobei besonders bevorzugt die Kohlenmonoxid-Entfernungseinheit unabhängig von der Reformierungseinheit kühlbar ist.

Die Erfindung ist besonders für Brennstoffzellensysteme mit niedrigem Systemdruck geeignet, insbesondere für Brennstoffzellensysteme in denen zumindest die Kathodenableitung einen Mediendruck von höchstens 2 bar aufweist. Eine solches niedriges Druckniveau ist beispielsweise mit einfachen Gebläsen darstellbar, aufwendige Kompressoren und andere Hochdruckkomponenten können eingespart werden. Das System ist sehr einfach aufgebaut. Besonders vorteilhaft ist das erfindungsgemäße System für Anwendungen, bei denen Verbraucher mit geringer bis mittlerer elektrischer Leistung mittels Brennstoffzelle versorgt werden sollen, insbesondere Nebenaggregate in Fahrzeugen oder stationären Anlagen.

Weitere Vorteile und Ausgestaltungen der Erfindung ergeben sich aus der Beschreibung und der beiliegenden Zeichnung.

Es versteht sich, daß die vorstehend genannten und die nachstehend noch zu erläuternden Merkamle nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispieles in der Zeichnung schematisch dargestellt und wird im folgenden unter Bezugnahme auf die Zeichnung ausführlich beschrieben. Es zeigen
Fig. 1 ein bevorzugtes Brennstoffzellensystem zur Durchführung des erfindungsgemäßen Verfahrens und
Fig. 2 eine bevorzugte Ausgestaltung auf der Abgasseite des Brennstoffzellensystems.

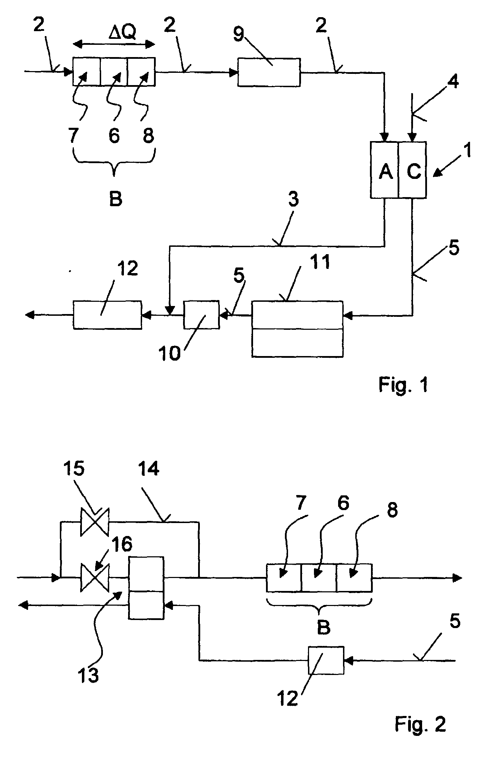

In Fig. 1 ist ein erfindungsgemäßes Brennstoffzellensystem mit einer Brennstoffzelle 1 dargestellt. Die Brennstoffzelle 1 weist einen Anodenraum A und einen Kathodenraum C auf. Der Anodenraum A wird über eine eintrittseitigen Anodenzuführung 2 und der Kathodenraum C mit eintrittseitigen Kathodenzuführung 4 mit einem wasserstoffhaltigen Medium oder Mediengemisch versorgt. Die zumindest teilweise in der Brennstoffzelle 1 umgesetzten Medien werden über eine austrittseitige Anodenabführung 3 und eine austrittseitige Kathodenabführung 5 aus der Brennstoffzelle 1 abgeführt.

Die Brennstoffzelle 1 kann aus einer Einzelzelle bestehen oder auch aus mehreren Brennstoffzellen, z.B. einem Brennstoffzellenstapel, welche durch Reihenschaltung und/oder Parallelschaltung elektrische Spannungen zur Verfügung stellen, die z.B. zum Antrieb eines Fahrzeugs ausreichend sein können oder bevorzugt zur Versorgung von Verbrauchern in solchen Fahrzeugen geeignet sind.

In der Anodenzuführung 2 ist ein Bauteil B vorgesehen, welches eine Oxidationseinheit 6, eine Reformierungseinheit 8 und einen ersten Verdampfer 8 aufweist. Die Einheiten sind im Bauteil B baulich und thermisch eng gekoppelt.

Die Oxidationseinheit 6 ist dazu vorgesehen, einen Teil des wasserstoffhaltigen Mediums oder Mediengemischs zu oxidieren. Das dabei erzeugte Wasser und die Abwärme durch die Verbrennung des Mediums oder Mediengemischs wird in der Reformierungsreaktion der Reformierungseinheit 7 reformiert. Der dabei entstehende wasserstoffreiche Reformatstrom wird dem Anodenraum A zugeführt.

Der erste Verdampfer 7 ist zum Verdampfen des wasserstoffhaltigen Mediums oder Mediengemischs, z.B. Methanol, vorgesehen. Er kann optional in dem Bauteil B vorgesehen sein und ist besonders bei einem flüssigen wasserstoffhaltigen Medium oder Mediengemisch günstig.

Die bei der Oxidation entstehende Abwärme der Oxidationseinheit 6 wird zur Unterstützung der Reformierungsreaktion eingesetzt. Bevorzugt wird die Abwärme auch zur Verdampfung des wasserstoffhaltigen Mediums oder Mediengemischs im ersten Verdampfer 8 eingesetzt. Von der Oxidationseinheit 6 strömt eine Wärmemenge ΔQ zur Reformierungseinheit 8 und/oder zum Verdampfer 7.

Durch die Verbrennung in der Oxidationseinheit 6 wird proportional zur Oxidationsrate des wasserstoffhaltigen Mediums oder Mediengemischs Nasser erzeugt, welches in der Reformierungseinheit 8 zur Reformierung zur Verfügung steht. Dabei ist der Wasserbedarf im Wasserhaushalt der Reformierungsreaktion direkt mit der Oxidationsrate gekoppelt.

Dabei kann abhängig vom Wasserbedarf bei der Reformierung die Menge des wasserstoffhaltigen Mediums oder Mediengemischs variiert werden, die zur Wassererzeugung verbrannt wird. Dies kann auf mehrere Arten erfolgen.

Je mehr Abwärme abgeführt werden muß, bzw. in einem Prozeß benötigt wird, desto mehr Medium wird in der Oxidationseinheit 6 verbrannt und um so mehr Wasser wird dort erzeugt. Wird mehr Wasser benötigt, wird die Oxidationsrate erhöht, wird weniger Wasser benötigt, wird die Oxidationsrate gesenkt.

Im erfindungsgemäßen Verfahren zum Betreiben des Brennstoffzellensystems stellt der Wasserbedarf der Reformierungsreaktion eine Führungsgröße dar, an die die Oxidationsrate der Verbrennung angepaßt wird. Der thermische Haushalt des Bauteils B wird entsprechend nachgeführt.

In einer bevorzugten Weiterbildung wird das Bauteil B mit Verdampfer 7, Oxidationseinheit 6 und Reformierungseinheit 8 aktiv gekühlt, insbesondere mediengekühlt, so daß in der Oxidationseinheit 6 mehr wasserstoffhaltiges Medium oder Mediengemisch verbrannt werden muß, um genügend Abwärme zur Aufrechterhaltung der Reformierungsreaktion zu erzeugen. Eine günstige Ausgestaltung ist, hierzu eine separate Wasserkühlung des Bauteils B vorzusehen.

Es können auch jeweils die einzelnen Komponenten Verdampfer 7 und/oder Oxidationseinheit 6 und/oder Reformierungseinheit 8 für sich aktiv gekühlt werden oder Kombinationen der Komponenten im Bauteil 3. Da die Abwärme der Oxidationseinheit 6 sowohl die Reformierungsreaktion als auch die Verdampfung unterstützt, bestimmt die Stärke der Kühlung dann die Menge des erzeugten Wassers bei der Verbrennung.

Der Reformierungseinheit 8 ist zweckmäßigerweise eine Kohlenmonoxid-Entfernungseinheit 9 nachgeschaltet, um das nach der Reformierung wasserstoffreiche Medium vor dem Eintritt in den Anodenraum zu reinigen. Dabei wird die Kohlenmonoxid-Entfernungseinheit 9 vorzugsweise nicht mit der Reformierungseinheit 8 thermisch gekoppelt, d.h. die Abwärme der Kohlenmonoxid-Entfernungseinheit 9 wird nicht an die endotherme Reformierungsreaktion abgeführt. Bevorzugt wird die Kohlenmonoxid-Entfernungseinheit 9 wassergekühlt.

Damit wird wiederum mehr Wasser in der Oxidationseinheit 6 erzeugt, da die Abwärme der Verbrennung die Reformierungsreaktion vollständig nährt, als wenn ein Teil des thermischen Bedarfs durch die Kohlenmonoxid-Entfernungseinheit 9 gedeckt würde.

Austrittseitig des Anodenraums A ist eine Abgasverbrennungseinheit 12 angeordnet. Austrittseitig des Kathodenraums C ist in der Kathodenabführung 5 ein Abgaskühler 11 zur Kühlung des Kathodenabgases angeordnet. Diesem nachgeschaltet ist ein Wasserabtrennmittel 10, vorzugsweise ein Kondensator 10. Hinter dem Kondensator gelangt das Kathodenabgas und das Anodenabgas in die Abgasverbrennungseinheit 12.

Eine Zufuhr von Sauerstoff, bevorzugt eine Luftzudosierung, in die Oxidationseinheit 6 und in möglicherweise vorhandene Kohlenmonoxid-Entfernungseinheiten 9 erfolgt zweckmäßigerweise über eine Regelung der Luftförderung, z.B. über die Drehzahlsteuerung oder -regelung eines Gebläses. Dabei wird bevorzugt die Temperatur des Systems auf einen vorgegebenen Wert eingestellt und im Betrieb auf diesen Wert geregelt. Die Versorgung mit Sauerstoff erfolgt vorzugsweise in Abhängigkeit von einer Temperatur in der Oxidationszone der Oxidationseinheit 6 und/oder einer Temperatur der Reformierungszone der Reformierungseinheit 8 und/oder einer Temperatur in der Kohlenmonoxid-Entfernungseinheit 9 und/oder einer Austrittstemperatur aus den jeweiligen Zonen des in der Oxidationseinheit 6 bzw. der Reformierungseinheit 7 und/oder der Kohlenmonoxid-Entfernungseinheit 9 behandelten Mediums. Zweckmäßigerweise ist die Zuführung des Sauerstoffs, bevorzugt der Luft, möglichst druckverlustarm ausgeführt.

Vorzugsweise ist die Aufteilung der geförderten Luft über einen Druckverlust von entsprechenden (nicht dargestellten) Zuleitungen und/oder Ableitungen der Reformierungseinheit 8 und/oder Oxidationseinheit 6 auf einen vorgegebenen Wert eingestellt. Eine weitere bevorzugte Möglichkeit besteht darin, die Aufteilung der geförderten Luft über druckverlustarme Mechanismen, z.B. Klappen, in den entsprechenden Leitungen zu verändern.

In einem bevorzugten Niederdruck-Brennstoffzellensystem mit einem höchsten vorkommenden Druck von höchstens 2 bar in einem Sauerstoffzuführsystem des Brennstoffzellensystems erfolgt die für eine Reformierungsreaktion und/oder eine Verdampfung notwendige Wärme stromauf des Anodenraums A durch teilweise Verbrennung von wasserstoffhaltigen Medien zu Wasser. Besonders günstig ist, wenn Oxidationseinheit 6 und Kohlenmonoxid-Entfernungseinheit 9 durch ein gemeinsames Fördermittel, vorzugsweise ein Gebläse mit Sauerstoff oder Luft, versorgt werden können.

Im Sauerstoff- oder Luftzuführsystem des Brennstoffzellensystems sind an der oder den entsprechenden Verzweigungen druckverlustarme Verteiler angeordnet, die einen Druckverlust von höchstens 100 mbar verursachen, bevorzugt von höchstens 10 mbar. Solche Verteiler sind z.B. Schieber und/oder Klappen und/oder auch Nadelventile. Die Temperatur vorzugsweise des Reformierungsreaktors 7 wird auf einen vorgegebenen Wert eingestellt, und die Temperatur wird auf diesen Wert geregelt.

Der besonders Vorteil besteht darin, daß zur Luft- oder Sauerstoffdosierung in die einzelnen Bereiche des Brennstoffzellensystems sonst übliche aufwendige und teure druckverlustgebende Dosiereinrichtungen vermieden werden können. Dies ist besonders für ein Niederdrucksystem, bei dem auch eine hohe Dynamik nicht unbedingt gefordert ist, besonders günstig.

Besonders vorteilhaft ist, daß zur Unterstützung der Reformierungsreaktion nunmehr nur ein Teil des Wassers aus dem Kathodenabgas zurückgewonnen werden muß, da bereits in der Anodenzuführung 2 zusätzliches Wasser erzeugt wird und für die Reaktion zur Verfügung steht. Diese Menge kann durch die Menge des wasserstoffhaltigen Mediums oder Mediengemischs, das in der Oxidationseinheit 6 verbrannt wird, bedarfsabhängig eingestellt werden.

Damit kann jedoch gleichzeitig das Temperaturniveau zur Kondensation von Wasser in Wasserabscheidemitteln 10 in der Kathodenabführung 5 insgesamt höher liegen. Der Wärmeübertrageraufbau des Kondensators kann dann weniger voluminös ausgelegt werden. Bei Membranverfahren ist entsprechend auch eine weniger effiziente Abscheidung von Wasser aus dem Kathodenabgas ausreichend, um den Wasserhaushalt des Systems aufrechtzuerhalten. Damit steht auch bei einem Brennstoffzellensystem mit niedrigem Systemdruck im Gaserzeugungssystem, vorzugsweise von höchstens 2 bar, ausreichend Wasser zum Betrieb des Brennstoffzellensystems zur Verfügung. Das Brennstoffzellensystem ist stark vereinfacht und daher billig.

Zusätzlich kann in einer Weiterbildung der Erfindung noch die Wärme bei der Verbrennung des Anodenabgases und des Kathodenabgases, die in der Abgasverbrennungseinheit 12 entsteht, vorteilhaft genutzt werden. Dies ist in Fig. 2 dargestellt.

Abstromseits der Abgasverbrennungseinheit 12 ist ein zweiter Verdampfer 13 angeordnet, der zum Verdampfen von Medien in der Anodenzuführung 2 vorgesehen ist. Der zweite Verdampfer 13 ist zustromseitig vor dem ersten Verdampfer 7 in der Anodenzuführung 2 angeordnet. Vorzugsweise ist der zweite Verdampfer 13 ein Heißgasverdampfer.

Zur Überbrückung des zweiten Verdampfers ist eine Überbrückungsleitung 14 vorgesehen, so daß der Anode A zuzuführende Medien direkt zum ersten Verdampfer 7 gelangen können. Dies ist bei kritischem Wasserhaushalt zweckmäßig, wenn mehr Wasser in der Oxidationseinheit 6 erzeugt werden muß.

Die Oxidationsrate in der Oxidationseinheit 6 steigt an, weil dann auch die Wärme zur Verdampfung des wasserstoffhaltigen Mediums oder Mediengemischs vollständig durch die Oxidationseinheit 6 bereitgestellt werden muß. Es wird entsprechend mehr Wasser in der Oxidationseinheit 6 durch Verbrennung erzeugt, und die Wasserbilanz wird entsprechend positiv beeinflußt.

In einem Zustand mit kritischer Wasserbilanz wird das Ventil 16 und somit der Zugang zum zweiten Verdampfer 13 für das wasserstoffhaltige Medium oder Mediengemisch geschlossen, während das Ventil 15 geöffnet wird und den Weg für das Medium oder das Mediengemisch in die Überbrückungsleitung 14 zum ersten Verdampfer 7 freimacht.

Das erfindungsgemäße Verfahren und die erfindungsgemäße Anordnung eignen sich ganz besonders für Brennstoffzellensysteme, die einen geringen Systemdruck aufweisen, sowie solche Systeme die keine hohen Dynamikanforderungen haben. Solche Systeme können durch die Erfindung sehr preiswert ausgelegt werden. Eine Wirkungsgradverringerung des Gaserzeugungssystems kann gezielt eingesetzt werden, um den thermischen und den Wasserhaushalt des Brennstoffzellensystems zu versorgen, wobei unter Wirkungsgrad das Verhältnis zwischen Energieinhalt des in der Brennstoffzelle 1 abgegebenen Wasserstoffs zu dem Energieinhalt des dem System zugeführten wassrstoffhaltigen Brennstoffs verstanden wird. Das Brennstoffzellensystem wird dadurch besonders einfach und billig.

Bevorzugt ist die Verwendung in Systemen, bei denen das Brennstoffzellensystem zur Bordstromversorgung von Nebenaggregaten in Fahrzeugen eingesetzt wird.

## Patentansprüche

1. Verfahren zum Betreiben eines Brennstoffzellensystems mit einem Wasserhaushalt, bei dem ein wasserstoffhaltiges Medium oder Mediengemisch in einem Reformierungsreaktor (8) mit einem Wasserbedarf unter Wasserzugabe zu einem wasserstoffreichen Reformat reformiert wird, das Reformat einem Anodenraum (A) einer Brennstoffzelle (1) über eine Anodenzuführung (2) zugeführt und in der Brennstoffzelle (1) mit Sauerstoff aus einem Kathodenraum (C) der Brennstoffzelle (1) zu Wasser umgesetzt wird,
dadurch gekennzeichnet,
daß der Wasserbedarf der Reformierungsreaktion und/oder der Wasserhaushalt des Brennstoffzellensystems direkt an eine Oxidationsrate einer teilweisen Verbrennung des wasserstoffhaltigen Mediums oder Mediengemischs in einer Oxidationseinheit (6) stromauf des Reformierungsreaktors (8) gekoppelt wird.

2. Verfahren nach Anspruch 1,
dadurch gekennzeichnet,
daß die Reformierungsreaktion direkt mit bei der Verbrennung entstehender thermischer Energie unterstützt wird.

3. Verfahren nach Anspruch 1,
dadurch gekennzeichnet,
daß die Reformierungsreaktion thermisch nur durch bei der Verbrennung entstehende thermische Energie unterstützt wird.

4. Verfahren nach Anspruch 1,
dadurch gekennzeichnet,
daß bei erhöhtem Wasserbedarf der Reformierungsreaktion und/oder erhöhtem Wasserbedarf im Wasserhaushalt des Brennstoffzellensystems die Oxidationsrate der Verbrennung gesteigert wird.

5. Verfahren nach Anspruch 1,
dadurch gekennzeichnet,
daß bei verringertem Wasserbedarf der Reformierungsreaktion und/oder verringertem Wasserbedarf im Wasserhaushalt des Brennstoffzellensystems die Oxidationsrate der Verbrennung gesenkt wird.

6. Verfahren nach Anspruch 1,
dadurch gekennzeichnet,
daß eine Verdampfungsreaktion in einem ersten Verdampfer (7) mit bei der Verbrennung entstehender thermischer Energie unterstützt wird.

7. Verfahren nach Anspruch 6,
dadurch gekennzeichnet,
daß thermische Energie aus Abgasen der Brennstoffzelle (1) zur Verdampfung des wasserstoffhaltigen Mediums oder Mediengemisch in einem zweiten Verdampfer (13) bereitgestellt wird, so daß das wasserstoffhaltige Medium oder Mediengemisch dem ersten Verdampfer (7) zumindest teilweise gasförmig zugeführt wird.

8. Verfahren nach Anspruch 7,
dadurch gekennzeichnet,
daß bei erhöhtem Wasserbedarf der Reformierungsreaktion der zweite Verdampfer (13) überbrückt wird.

9. Verfahren nach Anspruch 1,
dadurch gekennzeichnet,
daß aus dem Reformat Kohlenmonoxid durch eine exotherme Reaktion entfernt wird, wobei die Kühlung der exothermen Reaktion unebhängig vom thermischen Bedarf der Reformierungsreaktion erfolgt.

10. Verfahren nach Anspruch 1,
dadurch gekennzeichnet,
daß thermische Energie aus einem thermischen System bestehend aus erstem Verdampfer (7), Oxidationsseinheit (6) und Reformierungseinheit (8) oder bestehend aus Oxidationsseinheit (6) und Reformierungseinheit (8) zusätzlich abgeführt wird, um die Oxidationsrate zu erhöhen.

11. Verfahren nach Anspruch 1,
dadurch gekennzeichnet,
daß eine Zufuhr von Sauerstoff in die Oxidationseinheit (6) und/oder in die Kohlenmonoxid-Entfernungseinheit (9) in Abhängigkeit einer Temperatur in einem Bereich der Verbrennung und/oder einem Bereich der Reformierungsreaktion und/oder in einem Bereich der Kohlenmonoxidentfernung erfolgt.

12. Verfahren nach Anspruch 1,
dadurch gekennzeichnet,
daß eine Zufuhr von Sauerstoff in die Oxidationseinheit (6) und/oder in die Kohlenmonoxid-Entfernungseinheit (9) in Abhängigkeit einer Austrittstemperatur eines Mediums aus der Oxidationseinheit (6) und/oder einer Austrittstemperatur des Reformats aus der Reformierungsreaktion und/oder einer Austrittstemperatur aus der Kohlenmonoxid-Entfernungseinheit (9) erfolgt.

13. Verfahren nach Anspruch 1,
dadurch gekennzeichnet,
daß das Brennstoffzellensystem auf eine vorgegebene Temperatur des Reformierungsreaktors (7) eingestellt und die Temperatur durch die Menge des zugeführten Sauerstoffs eingehalten wird.

14. Verfahren nach Anspruch 1,
dadurch gekennzeichnet,
daß in einem Niederdruck-Brennstoffzellensystem mit einem höchsten vorkommenden Druck von höchstens 2 bar in einem Sauerstoffzuführsystem des Brennstoffzellensystems die für eine Reformierungsreaktion und/oder eine Verdampfung notwendige Wärme stromauf des Anodenraums (A) durch teilweise Verbrennung von wasserstoffhaltigen Medien zu Wasser erfolgt.

15. Anordnung zur Durchführung des Verfahrens gemäß einem der vorangegangenen Ansprüche 1-14 bestehend aus einem Brennstoffzellensystem mit mindestens einer Brennstoffzelle (1), die einen Anodenraum (A) mit eintrittseitiger Anodenzuführung (2) und austrittseitiger Anodenabführung (3) und einen Kathodenraum (C) mit eintrittseitiger Kathodenzuführung (4) und austrittseitiger Kathodenabführung (5) beinhaltet,
dadurch gekennzeichnet,
daß in der Anodenzuführung (2) ein Bauteil (B) vorgesehen ist, welche eine Oxidationseinheit (6) zur teilweisen Oxidation eines wasserstoffhaltigen Mediums oder Mediengemischs und eine Reformierungseinheit (8) zur Erzeugung eines wasserstoffreichen Reformats aus dem wasserstoffhaltigen Medium oder Mediengemisch aufweist, wobei die Oxidationseinheit (6) thermisch direkt mit der Reformierungseinheit (8) gekoppelt ist.

16. Anordnung nach Anspruch 15,
dadurch gekennzeichnet,
daß das Bauteil (B) zusätzlich einen ersten Verdampfer (7) zum Verdampfen des wasserstoffhaltigen Mediums oder Mediengemischs aufweist, der thermisch direkt mit der Oxidationseinheit (6) gekoppelt ist.

17. Anordnung nach Anspruch 15,
dadurch gekennzeichnet,
daß bezogen auf das wasserstoffhaltige Medium oder Mediengemisch zustromseits vor dem Bauteil (B) zusätzlich ein zweiter Verdampfer (12) angeordnet ist, der mit Abgasen der Brennstoffzelle (1) beheizbar ist.

18. Anordnung nach Anspruch 15,
dadurch gekennzeichnet,
daß zwischen dem Bauteil (B) und Anodenraum (A) eine Kohlenmonoxid-Entfernungseinheit (9) zum Entfernen von Kohlenmonoxid aus dem Reformat angeordnet ist.

19. Anordnung nach Anspruch 18,
dadurch gekennzeichnet,
daß die Kohlenmonoxid-Entfernungseinheit (9) unabhängig von der Reformierungseinheit (9) kühlbar ist.

20. Anordnung nach Anspruch 15,
dadurch gekennzeichnet,
daß in der Anodenzuführung (2) eine Überbrückungsleitung (14) zur Umgehung des zweiten Verdampfers (13) vorgesehen ist, so daß das wasserstoffhaltige Medium oder Mediengemisch dem ersten Verdampfer (7) direkt zuführbar ist.

21. Anordnung nach Anspruch 15,
dadurch gekennzeichnet,
daß der Mediendruck in der Kathodenabführung (5) höchstens 2 bar beträgt.

22. Anordnung nach Anspruch 15,
dadurch gekennzeichnet,
daß zur Sauerstoffzufuhr in das Brennstoffzellensystem ein Luftförderer mit regelbarer oder steuerbarer Drehzahl vorgesehen ist.

23. Anordnung nach Anspruch 15,
dadurch gekennzeichnet,
daß ein druckverlustarmer Verteiler mit einem Druckverlust von höchstens 100 mbar zur Sauerstoffversorgung im Brennstoffzellensystem vorgesehen ist.
